# EUROPEAN PATENT APPLICATION

(11) **EP 4 485 791 A1**
(43) Date of publication of application: **01.01.2025**
(21) Application number: 23182621.5
(22) Date of filing: 30.06.2023
(51) Int. Cl.: H02P 6/08, H02P 7/29, H02P 7/292, H02P 5/68, H04L 12/10, H04L 12/28, H04L 12/40

(54) **MOTOR CONTROL DEVICE**

(71) Applicant: STMicroelectronics International N.V., 1228 Plan-les-Ouates, Geneva (CH)
(72) Inventor: MENDEN, Dietmar, 85774 UNTERFOEHRING (DE); BJOERNSEN, Christian, 85055 INGOLSTADT (DE)
(74) Representative: Cabinet Beaumont

(57) **Abstract**

The present disclosure relates to a motor control device (100) comprising at least:
- a motor driver electronic circuit (102) configured to be electrically coupled to at least one motor (104, 202) and to drive said at least one motor;
- a control electronic circuit (106) electrically coupled to the motor driver electronic circuit, and configured to control the motor driver electronic circuit and to be electrically coupled to a motor position sensor (108);
wherein the control electronic circuit further comprises a CAN type transceiver (114) configured to directly communicate with at least one main ECU (206), which is external to the motor control device, using a commander and responder CAN type communication protocol, the control electronic circuit being configured to act as a responder node during a communication with the main ECU.

## Description

### Technical field

The present disclosure relates generally to a motor control device, e.g. used in automotive or industrial environment.

### Background art

Recent cars require complex E/E (Electrical/Electronic) car network with many sensors, actuators and ECUs (Electronic Control Unit) inside each car.

For example, a steering column position control of a car requires at least one separate and dedicated ECU to control a first DC motor in X-direction (to adjust the height of the mechanical part of the column) and a second DC motor in Z-direction (to adjust the inclination of the mechanical part of the column). The control of these two DC motors is handled asynchrony (e.g. first along the X-axis and after along the Z-axis) as the control data sent from a main ECU to the dedicated ECU are transmitted using a LIN (Local Interconnect Network) bus protocol, which is limited to around 20 kBaud. If the steering column position control corresponds to an optional car feature, additional wire harness, ECU and dedicated software inside the ECU are required. Dedicated software used to drive the motor is usually small in terms of memory footprint but needs to follow full automotive rules.

Another example is car's light level control (light position adjustment) which requires a separate and dedicated ECU to control the lights position. The communication between this dedicated ECU and a main ECU is done via a CAN (Controller Area Network) or CAN FD (Controller Area Network Flexible Data-Rate) bus which is limited to around 1 MBaud. If the light level control is an optional car feature, additional wire harness, ECU and dedicated software in the ECU are also required.

### Summary of Invention

There is a need to propose an alternative solution in order to control motors in a network environment comprising one or several main ECUs, without the drawbacks of the previously described control solutions.

One embodiment addresses all or some of these drawbacks and proposes a motor control device comprising at least:
- a motor driver electronic circuit configured to be electrically coupled to at least one motor and to drive said at least one motor;
- a control electronic circuit electrically coupled to the motor driver electronic circuit, and configured to control the motor driver electronic circuit and to be electrically coupled to a motor position sensor;
wherein the control electronic circuit further comprises a CAN type transceiver configured to directly communicate with at least one main ECU, which is external to the motor control device, using a commander and responder CAN type communication protocol, the control electronic circuit being configured to act as a responder node during a communication with the main ECU.

In one particular embodiment, the motor driver electronic circuit comprises a H-bridge circuit.

In one particular embodiment, the H-bridge circuit comprises four MOSFETs, and the motor driver electronic circuit comprises a gate driver circuit electrically coupled to gates of the four MOSFETs.

In a particular embodiment, the motor control device further comprises a support to which the motor driver electronic circuit and the control electronic circuit are mechanically secured, and the motor control device further comprises the motor position sensor which is mechanically secured to the support.

In a particular embodiment, the motor position sensor comprises at least one Hall sensor.

In a particular embodiment, the control electronic circuit is configured to send, to the motor driver electronic circuit, at least one motor control signal defining at least one position of the motor according to at least one signal sent by the motor position sensor to the control electronic circuit.

In a particular embodiment, the control electronic circuit further comprises a Serial Peripheral Interface type communication port configured to be coupled to the main ECU.

In a particular embodiment, the control electronic circuit comprises control logic elements forming a state machine configured to implement at least one of the following functions:
- Hall pulses counter, when the motor control device comprises the at least one Hall sensor;
- PWM modulator / demodulator;
- motor current sensor;
- motor failure identification;
- fail-safe functionalities;
- watchdog and standby modes.

Another particular embodiment proposes a motor assembly comprising at least one motor and at least one motor control device as previously described, wherein the motor comprises at least one control input electrically coupled to at least one output of the motor driver electronic circuit of the motor control device.

In a particular embodiment, the motor is a DC brushed motor.

In a particular embodiment, the motor assembly further comprises at least one of the following elements configured to control the position of the motor: magnetic disk, optical encoder, closed loop control.

Another particular embodiment proposes a vehicle network system comprising at least several main ECUs, at least one gateway through which the several main ECUs are electrically interconnected, and several motor assemblies as previously disclosed, wherein the CAN type transceivers of the motor assemblies are electrically and directly coupled to the main ECUs.

In a particular embodiment, the several main ECUs, the at least one gateway and the several motor assemblies are arranged and electrically coupled according to a domain or zonal architecture.

In a particular embodiment, the vehicle network system forms an Electrical/Electronic car network.

### Brief description of drawings

The foregoing features and advantages, as well as others, will be described in detail in the following description of specific embodiments given by way of illustration and not limitation with reference to the accompanying drawings, in which:
- Figure 1 schematically illustrates a motor control device according to one particular embodiment;
- Figure 2 schematically illustrates a particular configuration of a motor control device;
- Figure 3 schematically illustrates an example of a motor assembly comprising motor control devices according to one particular embodiment, used in an example of steering column position control architecture;
- Figure 4 schematically illustrates a first example of a vehicle network system according to a particular embodiment;
- Figure 5 schematically illustrates a second example of a vehicle network system according to a particular embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, different elements (motor driver electronic circuit, control electronic circuit, CAN type transceiver, etc.) of the described motor control devices have not been detailed. Detailed implementation of these elements is within the capabilities of those skilled in the art based on the functional description provided hereinabove.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

Unless specified otherwise, the expressions "around", "approximately", "substantially" and "in the order of" signify within 10 %, and preferably within 5 %.

In all the document, a direct communication or a direct electrical connection or coupling between a CAN type transceiver and a main ECU may be understand as corresponding to communication or connection or coupling implemented without an intermediate ECU between the CAN type transceiver and the main ECU.

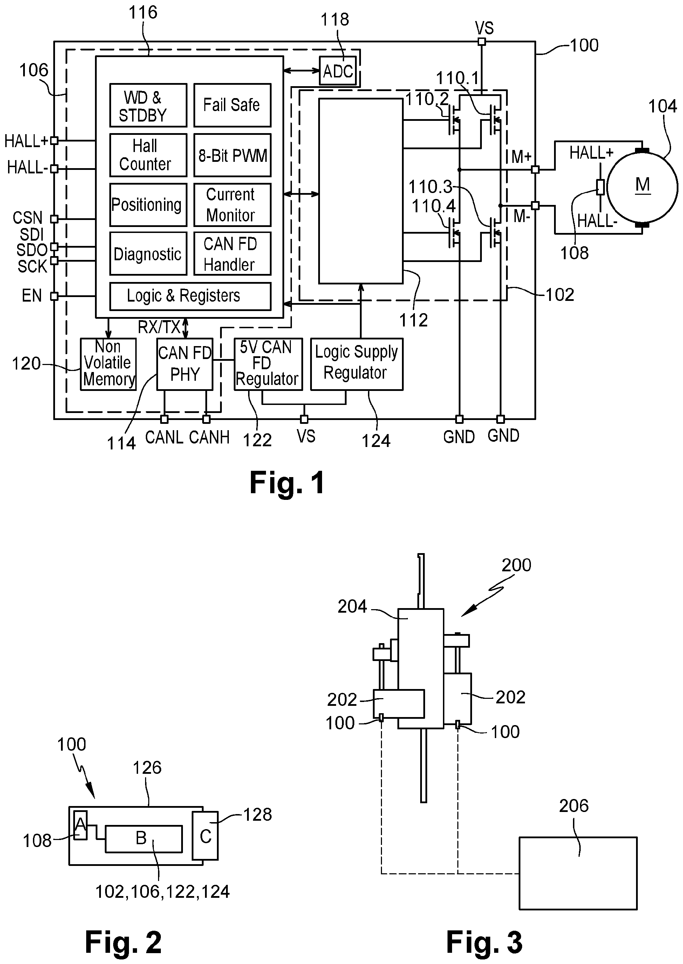

An example embodiment of a motor control device 100 is described below in relation with Figure 1.

The motor control device 100 comprises at least a motor driver electronic circuit 102 configured to be electrically coupled to at least one motor 104 and to drive it. In an example embodiment, the motor 104 corresponds to a DC brushed motor. The motor 104 may comprise, as in the configuration shown in Figure 1, two electrical inputs connected to outputs of the motor driver electronic circuit 102 (labeled "M+" and "M-" in Figure 1).

The motor control device 100 also comprises a control electronic circuit 106 electrically coupled to the motor driver electronic circuit 102, and configured to control the motor driver electronic circuit 102 and to be electrically coupled to a motor position sensor 108. In the example shown in Figure 1, the electrical coupling between the control electronic circuit 106 and the motor position sensor 108 is obtained between the inputs/outputs labeled "HALL+" and "HALL-" of the control electronic circuit 106 and terminals of the motor position sensor 108.

In the example embodiment shown in Figure 1, the motor position sensor 108 comprises at least one Hall sensor. More generally, the motor position sensor 108 may comprise any other component or circuit able to determine the position of the motor 104, i.e. the position of the rotor of the motor 104 in the case of a DC motor.

In the embodiment shown in Figure 1, the control electronic circuit 106 may be configured to send, to the motor driver electronic circuit 102, at least one motor control signal defining at least one position of the motor 104 according to at least one signal sent by the motor position sensor 108 to the control electronic circuit 106.

In a particular embodiment, the motor driver electronic circuit 102 may comprise a H-bridge circuit intended to send motor control signals to the motor 104. In the configuration shown in Figure 1, the H-bridge circuit may comprise four MOSFETs 110.1 - 110.4, the gates of which being electrically coupled to a gate driver circuit 112 belonging to the motor driver electronic circuit 102. In this configuration, the motor driver electronic circuit 102 may control the motor 104 in both directions. This H-bridge circuit may be fully integrated with the other elements of the motor control device 100.

The gate driver circuit 112 may comprise several electronic and logic components to control the H-bridge circuit and to communicate with the control electronic circuit 106.

The motor driver electronic circuit 102 may implement several functions related to the motor positioning or motor parameter sensing: positioning in an absolute or relative or stored position, set soft stop or soft start position, reference run, get voltage, current and temperature, etc. These different functions correspond to classical known functions to control a DC motor and are thus not described in details here. In the example embodiment shown in Figure 1, these functions may be implemented by the gate driver circuit 112.

Alternately to the configuration shown in Figure 1, the motor driver electronic circuit 102 may comprise components / circuits different than those above described.

The control electronic circuit 106 comprises a CAN type transceiver 114 configured to directly communicate with at least one main ECU (not shown in Figure 1) which is external to the motor control device 100. This communication between the control electronic circuit 106 and the main ECU is implemented using a commander and responder (also known as "master/slave") CAN type communication protocol, the control electronic circuit 106 being configured to act as a responder node during a communication with the main ECU. For example, the commander and responder CAN type communication protocol may be implemented according to the "CAN FD Light" specification published by the CAN in Automation (CiA) group under the reference "CiA 604-1". In the example embodiment shown in Figure 1, the CAN FD Light link between the main ECU and the CAN type transceiver 114 is formed by two wires connected to the inputs/outputs labeled "CANL" and "CANH" of the control electronic circuit 106 on one side, and to the main ECU on the other side.

Optionally, and in addition to the above described CAN FD Light link, the control electronic circuit 106 may further comprise a Serial Peripheral Interface (SPI) type communication port configured to be coupled to the main ECU. In the example configuration shown in Figure 1, the SPI communication port of the control electronic circuit 106 corresponds to the four inputs/outputs labeled "CSN" (Chip Select Node), "SDI" (Serial Data Input), "SDO" (Serial Data Output) and "SCK" (Serial Clock).

The control electronic circuit 106 may comprise control logic elements 116 forming a state machine dedicated to the management of the different functions fulfilled by the motor control device 100. In the example embodiment shown in Figure 1, these control logic elements 116 are configured to implement several functions:
- Hall pulses counter (symbolically shown as a box labeled "Hall Counter" in Figure 1), which enables to count pulses sent by the Hall sensor 108 to the control electronic circuit 106, in order to determine the position of the motor 104;
- PWM (Pulse Width Modulation) modulator / demodulator (symbolically shown as a box labeled "8-Bit PWM" in Figure 1) in order to modulate/demodulate information transmitted from/to the control electronic circuit 106. For example, the resolution of the modulation may be equal to 8 bits, and the duty cycle used for the PWM may be equal to 20 kHz;
- motor current sensor (symbolically shown as a box labeled "Current Monitor" in Figure 1), e.g. to check the motor current threshold which may vary according to the aging of the motor 104;
- failure identification (symbolically shown as a box labeled "Diagnostic" in Figure 1);
- Fail-Safe functionalities (symbolically shown as a box labeled "Fail Safe" in Figure 1);
- watchdog and standby modes (symbolically shown as a box labeled "WD & STBY" in Figure 1).

One or several parameters of the different functions fulfilled by the control logic elements 116 may be programmable (PWM duty cycle, number of Hall pulses per rotation, etc.).

These different functions correspond to known functions and are thus not described in details here.

As a variant, the control logic elements 116 may implement only a part of the above-mentioned functions, or function(s) different as those above described.

The control logic elements 116 may also comprise different registers suitable for the different functions fulfilled by the control logic elements 116.

The control electronic circuit 106 may also comprise an Analog-Digital Converter 118, e.g. used for the motor current sensor function.

The control electronic circuit 106 may also comprise a Non-Volatile Memory 120 which may be used by the control logic elements 116, e.g. to store values of position(s) of the motor 104 (position left / right) or driving parameters of the motor 104 (e.g. soft start, soft stop of the motor).

In the example embodiment shown in Figure 1, the motor control device 100 also comprises voltage regulators 122, 124 configured to select / adapt the supply voltage applied as input on the motor control device 100 to voltage(s) adapted to the motor driver electronic circuit 102 and the control electronic circuit 106 (e.g. 5 V and 12 V).

In a particular configuration, the motor control device 100 may comprise an "enable" input (labeled "EN" in Figure 1) in order to activate or not the motor control device 100 according to the value of the signal applied on this input. This input may be used to handle wake-up and standby modes of the motor control device 100. If this function is not used, it is possible to directly connect this EN input to the power supply.

The power supply provided to the motor control device 100 on the VS pin (as shown in Figure 1) may be between 4 V and 40 V (absolute maximum ratings), or between 6 V and 28 V (operating range), depending on the voltage required for the power driving of the motor 104.

The motor control device 100 may support DC-motor currents up to 15A.

In the previously described example, the motor control device 100 may correspond to a combination of a motor control state machine with an H-Bridge power stage, with a certain programmability of the motor control via a CAN FD Light interface. The motor control device 100 may thus form a smart motor controller with a CAN FD Light interface, which may be directly controlled by at least one main ECU, e.g. zonal or domain ECU, and which may directly communicate with the main ECU, in a decentralized manner.

The previously described elements of the motor control device 100 may be integrated in a single electronic chip, e.g. as a silicon-based integrated circuit.

In a particular configuration shown in Figure 2, the motor control device 100 may further comprise a support 126, e.g. a PCB (Printed Circuit Board), to which the previously described elements of the motor control device 100 (motor driver electronic circuit 102, control electronic circuit 106, voltage regulators 122, 124) are mechanically secured. For example, the one or several electronic chips, e.g. silicon electronic chips, including these elements may be electrically and mechanically coupled to the support 126. Circuitries 102, 106, 122, 124 are thus embedded inside one package formed by the motor control device 100.

The motor position sensor 108 may also be mechanically secured to the support 126. The support 126 may include the electrical connections between the motor position sensor 108 and the control electronic circuit 106. The motor control device 100 may also comprises an electrical connector 128 mechanically secured to the support 126 and configured to be electrically coupled to the motor 104 (thus including the outputs "M+" and "M-" shown in Figure 1).

Figure 3 schematically illustrates an example of a motor assembly 200 comprising two motor control devices 100 according to one particular embodiment. In this example, the motor assembly 200 is used to mechanically control the position of a steering column of a car.

In this particular embodiment, the motor assembly 200 may comprise two motors 202 which, in this particular configuration, correspond to DS brushed motors. Each of the two motors 202 comprises at least one control input electrically coupled to at least one output of the motor driver electronic circuit 102 of one of the motor control devices 100 (corresponding to the outputs "M+" and "M-" previously described in relation with Figure 1).

In this particular embodiment, one of the two motors 202 may be configured to control the position of a mechanical part 204 of the steering column according to an X-axis (height adjustment of the mechanical part 204), and the other of the two motors 202 may be configured to control the position of the mechanical part 204 of the steering column according to the Z-axis (inclination adjustment of the mechanical part 204) .

Each of the motor control devices 100 of the motor assembly 200 is coupled to a main ECU 206. In Figure 3, the electrical coupling between the main ECU 206 and the motor control devices 100 are symbolically shown with dotted lines. This coupling may correspond to several wires, e.g. at least four wires: supply voltage (e.g. equal to 12V), ground, CANL, CANH. However, these connections may comprise more wires, e.g. if the motor control devices 100 are also coupled to the main ECU 206 with LIN connections, or if the "enable" function of the motor control devices 100 is used.

When each of the motor control devices 100 are similar as that previously described in relation with Figure 2, the support 126 of each motor control device 100 may be integrated inside the plastic housing of the associated motor 202.

The motor control device 100 may thus be combined with the motor controlled by the motor control device 100 as part of the connector of the motor.

In a particular configuration, the motor assembly 200 may comprise at least one of the following elements configured to more precisely control the position of the motor(s): magnetic disk, optical encoder, closed loop control for servo functionality.

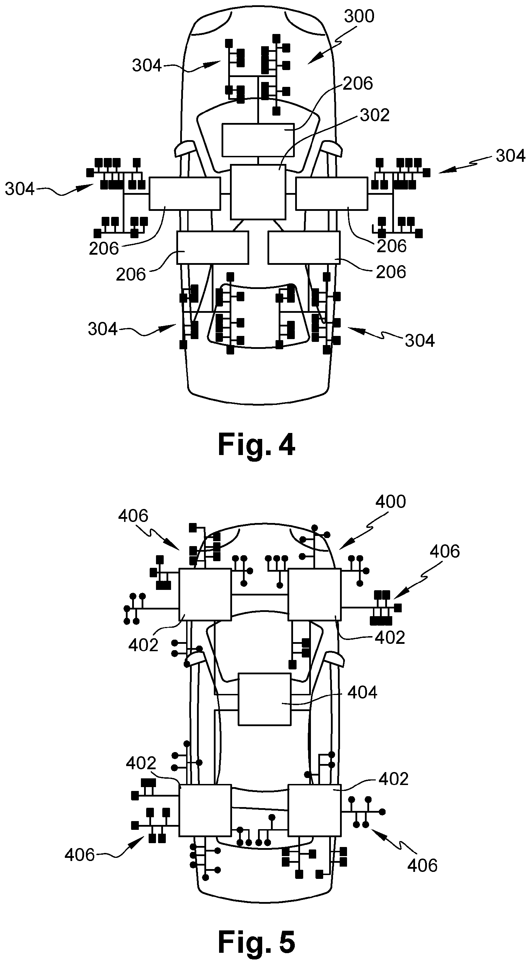

A first example of a vehicle network system 300 according to a particular embodiment is schematically shown in Figure 4. In this first example, the vehicle network system 300 corresponds to an E/E car network with a domain architecture.

In this first example, the vehicle network system 300 comprises several main ECUs 206 interconnected through a gateway 302. The vehicle network system 300 also comprises several sensors, actuators and motors symbolically represented as small rectangles designated by the reference 304. With the domain architecture of the vehicle network system 300, each main ECU 206 is dedicated to the control of sensors, actuators and motors used for the same domain or application (connectivity, driving, comfort, etc.). Sensors, actuators and motors are coupled to the main ECUs 206. The sensors, actuators and motors belonging to a same domain may be coupled to the same main ECU 206.

In the vehicle network system 300, one or several of the motors are each controlled by a motor control device 100. The CAN type transceivers 114 of these motor control devices 100 are electrically and directly coupled to the main ECUs 206.

A second example of a vehicle network system 400 according to a particular embodiment is schematically shown in Figure 5. In this second example, the vehicle network system 400 corresponds to an E/E car network having a zonal architecture.

In this second example, the vehicle network system 400 comprises several main ECUs (not individually referenced in Figure 5), each of main ECUs being dedicated to one zone of the vehicle network system 400. The vehicle network system 400 also comprises several sensors, actuators and motors symbolically represented as small rectangles designated by the reference 406. The sensors, actuators, motors and ECU(s) belonging to the same zone and dedicating to sensing and actuation in this zone are electrically interconnected one to the other through a zone gateway 402 (four zone gateways 402 are shown in Figure 5). The different zone gateways 402 of the vehicle network system 400 are electrically interconnected one to the other either directly or through a central gateway 404.

In the previously described motor control device 100, thanks to the use of a commander and responder CAN type communication protocol between the motor control device 100 and the main ECU (e.g. CAN FD Light protocol), several motors may be controlled synchronously (e.g. two at the same time). In addition, the commander and responder CAN type communication protocol enables fast reaction times which improve time depending safety mechanism (reaction and position time).

With the previously explained motor control device 100, the cost of the E/E car network may be reduced thanks to the less numbers of ECUs needed in the network.

In addition, the proposed motor control device 100 may have the capability to directly support zonal car architecture (as a "Smart Sensor"). With the proposed motor control device 100, no supplemental software is needed as the motor control features are embedded inside the electronic control circuit 106.

Moreover, the proposed motor control device 100 may involve wire harness reduction, and some inputs/outputs as well as optional "enable" connection (motor needed yes/no input, e.g. for options activation) may be not required, reducing the space constrain for the whole car series.

The reduction of the number of ECUs in the E/E car network may also reduce the construction space required for these ECUs.

With the integration of the commander and responder CAN type communication interface inside the motor control device, it may be possible to connect the motor control device directly to a main ECU like domain or zonal ones.

The previously described motor control device 100 may be used to create smart actuators by using only one device in combination with the motor controlling directly low-end applications by a main ECU.

The previously described motor control device may be used to control different types of motors used in automotive environment, e.g. motors used for steering column adjustment, light leveling control, seat adjustment, trunk lift, trunk cover, sun roof control, etc., and also in industrial environment, e.g. used for door and window opening, closing and positioning, window blinds, general mechanical positioning, etc.

Various embodiments and variants have been described. Those skilled in the art will understand that certain features of these embodiments can be combined and other variants will readily occur to those skilled in the art.

## Claims

1. A motor control device (100) comprising at least:
- a motor driver electronic circuit (102) configured to be electrically coupled to at least one motor (104, 202) and to drive said at least one motor (104, 202);
- a control electronic circuit (106) electrically coupled to the motor driver electronic circuit (102), and configured to control the motor driver electronic circuit (102) and to be electrically coupled to a motor position sensor (108);
wherein the control electronic circuit (106) further comprises a CAN type transceiver (114) configured to directly communicate with at least one main ECU (206), which is external to the motor control device (100), using a commander and responder CAN type communication protocol, the control electronic circuit (106) being configured to act as a responder node during a communication with the main ECU (206).

2. The motor control device (100) according to claim 1, wherein the motor driver electronic circuit (102) comprises a H-bridge circuit.

3. The motor control device (100) according to claim 2, wherein the H-bridge circuit comprises four MOSFETs (110.1
- 110.4), and wherein the motor driver electronic circuit (102) comprises a gate driver circuit (112) electrically coupled to gates of the four MOSFETs (110.1 - 110.4).

4. The motor control device (100) according to one of previous claims, further comprising a support (126) to which the motor driver electronic circuit (102) and the control electronic circuit (106) are mechanically secured, and wherein the motor control device (100) further comprises the motor position sensor (108) which is mechanically secured to the support (126).

5. The motor control device (100) according to claim 4, wherein the motor position sensor (108) comprises at least one Hall sensor.

6. The motor control device (100) according to one of previous claims, wherein the control electronic circuit (106) is configured to send, to the motor driver electronic circuit (102), at least one motor control signal defining at least one position of the motor (104, 202) according to at least one signal sent by the motor position sensor (108) to the control electronic circuit (106).

7. The motor control device (100) according to one of previous claims, wherein the control electronic circuit (106) further comprises a Serial Peripheral Interface type communication port configured to be coupled to the main ECU (206) .

8. The motor control device (100) according to one of previous claims, wherein the control electronic circuit (106) comprises control logic elements (116) forming a state machine configured to implement at least one of the following functions:
- Hall pulses counter, when the motor control device (100) comprises the at least one Hall sensor;
- PWM modulator / demodulator;
- motor current sensor;
- motor failure identification;
- fail-safe functionalities;
- watchdog and standby modes.

9. A motor assembly (200) comprising at least one motor (202) and at least one motor control device (100) according to one of previous claims, wherein the motor (202) comprises at least one control input electrically coupled to at least one output of the motor driver electronic circuit (102) of the motor control device (100).

10. The motor assembly (200) according to claim 9, wherein the motor (202) is a DC brushed motor.

11. The motor assembly (200) according to one of claims 9 or 10, further comprising at least one of the following elements configured to control the position of the motor (202): magnetic disk, optical encoder, closed loop control.

12. A vehicle network system (300, 400) comprising at least several main ECUs (206), at least one gateway (302, 402) through which the several main ECUs (206) are electrically interconnected, and several motor assemblies (200) according to one of claims 9 to 11, wherein the CAN type transceivers (114) of the motor assemblies (200) are electrically and directly coupled to the main ECUs (206).

13. The vehicle network system (300, 400) according to claim 12, wherein the several main ECUs (206), the at least one gateway (302, 402) and the several motor assemblies (200) are arranged and electrically coupled according to a domain or zonal architecture.

14. The vehicle network system (300, 400) according to one of claims 12 or 13, wherein the vehicle network system (300, 400) forms an Electrical/Electronic car network.
